# EUROPEAN PATENT APPLICATION

(11) **EP 4 503 184 A1**
(43) Date of publication of application: **05.02.2025**
(21) Application number: 23779489.6
(22) Date of filing: 13.03.2023
(51) Int. Cl.: H01M 4/38, C01B 33/02, C01G 25/02, H01M 4/36

(54) **NEGATIVE ELECTRODE ACTIVE MATERIAL FOR NONAQUEOUS ELECTROLYTE SECONDARY BATTERIES, AND NONAQUEOUS ELECTROLYTE SECONDARY BATTERY**

(30) Priority: 29.03.2022 JP 2022053178
(71) Applicant: Panasonic Energy Co., Ltd., Osaka 570-8511 (JP)
(72) Inventor: IWAMI Yasunobu, Kadoma-shi, Osaka 571-0057 (JP); MORIYA Shigeki, Kadoma-shi, Osaka 571-0057 (JP); KOIZUMI Isao, Kadoma-shi, Osaka 571-0057 (JP)
(74) Representative: Novagraaf International SA
(86) International application number: PCT/JP2023/009533
(87) International publication number: WO 2023/189467

(57) **Abstract**

A composite material (30) as one example of the embodiment of the present invention includes an Si-containing composite material (30) that contains an amorphous carbon phase (31), and silicon (32) and a metal oxide (35) which are dispersed in the carbon phase (31). The content of the metal oxide (35) is 0.001-2% by mass relative to the mass of the Si-containing composite material (30). The content of the silicon (32) is 60% by mass or less relative to the mass of the Si-containing composite material (30).

## Description

### TECHNICAL FIELD

The present disclosure relates to a negative electrode active material for non-aqueous electrolyte secondary battery and a non-aqueous electrolyte secondary battery using this negative electrode active material.

### BACKGROUND

In recent years, non-aqueous electrolyte secondary batteries such as lithium ion batteries have been widely used in applications that require high capacity, such as in-vehicle applications and power storage applications. The negative electrode active material, which is a main component of the negative electrode, is one of the important factors in increasing the battery capacity, and various studies have therefore been conducted on negative electrode active materials. In such studies, use of a material containing silicon (i.e., a Si-containing material) has attracted attention as a negative electrode active material having a high theoretical capacity density.

As the above-mentioned Si-containing material, for example, Patent Literature 1 discloses a composite material containing a carbon material and silicon. Furthermore, Patent Literature 2 discloses a Si-containing material which contains a composite composed of silicon and an oxide surrounding the silicon, and which also contains a carbon material.

### CITATION LIST

### PATENT LITERATURE

PATENT LITERATURE 1: U.S. Patent Application Publication No. 2020/0107693
PATENT LITERATURE 2: Japanese Unexamined Patent Application Publication No. 2007-500421

### SUMMARY

A negative electrode active material used in a non-aqueous electrolyte secondary battery desirably has a high capacity, and, from the perspective of improving the cycle characteristic of the battery, is desirably a material that is unlikely to cause side reactions with the electrolyte and also has low reaction resistance. The Si-containing materials of Patent Literature 1 and 2 still have room for improvement in terms of suppressing side reactions with the electrolyte and reducing reaction resistance.

A negative electrode active material for non-aqueous electrolyte secondary battery according to the present disclosure includes a Si-containing composite material which contains an amorphous carbon phase, and which also contains silicon and a metal oxide that are dispersed in the carbon phase. The content of the metal oxide is greater than or equal to 0.001 mass% and less than or equal to 2 mass% based on the mass of the Si-containing composite material, and the content of the silicon is less than or equal to 60 mass% based on the mass of the Si-containing composite material.

A non-aqueous electrolyte secondary battery according to the present disclosure includes a positive electrode, a negative electrode, and a non-aqueous electrolyte. The negative electrode contains the above-described negative electrode active material.

The negative electrode active material according to the present disclosure enables to provide a non-aqueous electrolyte secondary battery having a high capacity and an excellent cycle characteristic.

### BRIEF DESCRIPTION OF DRAWINGS

[FIG. 1] FIG. 1 is a cross-sectional view of a non-aqueous electrolyte secondary battery according to an example embodiment.
[FIG. 2] FIG. 2 is a cross-sectional view of a negative electrode active material according to an example embodiment.

### DESCRIPTION OF EMBODIMENTS

As mentioned above, a Si-containing material has a high theoretical capacity density, and, when used as a negative electrode active material, contributes to increasing the battery capacity. On the other hand, a battery using a Si-containing material has the problem that the cycle characteristic becomes deteriorated. In view of this, the present inventors have conducted intensive studies for improving the cycle characteristic of a high-capacity non-aqueous electrolyte secondary battery using a Si-containing material. As a result, it was found that in a Si-containing material containing an amorphous carbon phase and silicon dispersed in the carbon phase, by adding a predetermined amount of metal oxide to the carbon phase and controlling the silicon content to less than or equal to a predetermined amount, the cycle characteristic is specifically improved.

It is considered that, using a negative electrode active material according to the present disclosure, side reactions with the electrolyte can be effectively suppressed while maintaining low reaction resistance, and this contributes to improving the cycle characteristic of the battery. Here, if the amount of metal oxide contained in the carbon phase exceeds the predetermined amount, it is considered that reaction resistance would increase sharply, and no improvement in the cycle characteristic can be obtained.

Example embodiments of a negative electrode active material for non-aqueous electrolyte secondary battery according to the present disclosure and a non-aqueous electrolyte secondary battery using this negative electrode active material will be described in detail below by reference to the drawings. Configurations formed by selectively combining the constituent elements of a plurality of embodiments and variants described below are included within the scope of the present disclosure.

In the following, although a cylindrical battery in which a spiral-type electrode assembly 14 is housed in a bottomed cylindrical outer can 16 will be described as the non-aqueous electrolyte secondary battery by way of example, the outer casing of the battery is not limited to a cylindrical outer can. The non-aqueous electrolyte secondary battery according to the present disclosure may be, for example, a rectangular battery having a rectangular outer can or a coin-shaped battery having a coin-shaped outer can, or may be a pouch-type battery having an outer casing composed of a laminate sheet including a metal layer and a resin layer. Furthermore, the electrode assembly is not limited to being of a spiral type, and may be a laminate-type electrode assembly formed by alternately laminating a plurality of positive electrodes and a plurality of negative electrodes with interposed separators.

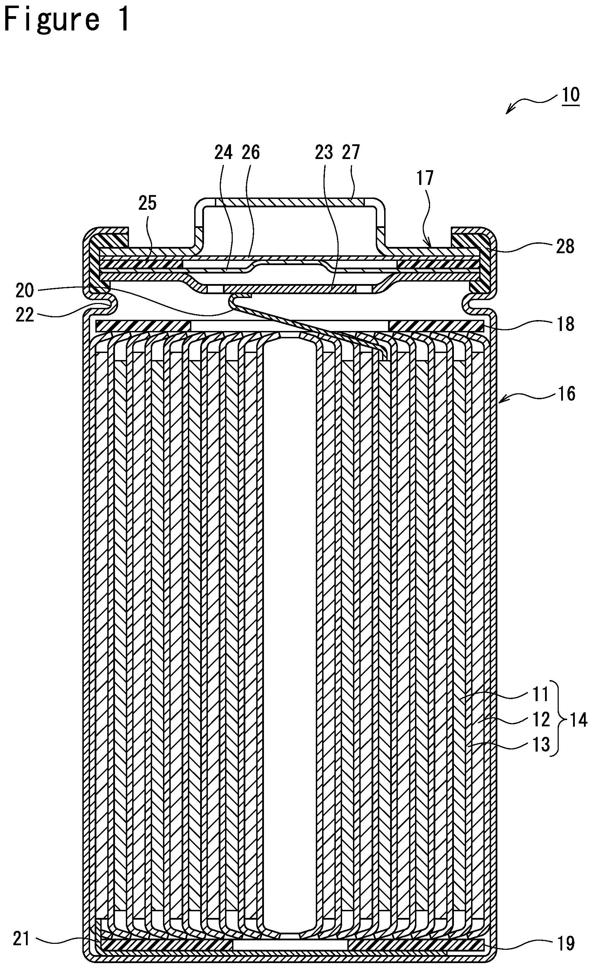

FIG. 1 is a cross-sectional view of a non-aqueous electrolyte secondary battery 10 according to an example embodiment. As shown in FIG. 1, the non-aqueous electrolyte secondary battery 10 comprises a spiral-type electrode assembly 14, a non-aqueous electrolyte (not shown in drawing), and an outer can 16 that houses the electrode assembly 14 and the non-aqueous electrolyte. The electrode assembly 14 comprises a positive electrode 11, a negative electrode 12, and a separator 13, and has a spiral structure formed by spirally winding a positive electrode 11 and a negative electrode 12 with an interposed separator 13. The outer can 16 is a bottomed cylindrical metal container having an opening at one axial end, and the opening of the outer can 16 is closed by a sealing assembly 17. For convenience of explanation, the side of the battery toward the sealing assembly 17 will be referred to as "upper", and the side toward the bottom portion of the outer can 16 will be referred to as "lower".

The non-aqueous electrolyte contains a non-aqueous solvent and an electrolyte salt dissolved in the non-aqueous solvent. As the non-aqueous solvent, for example, esters, ethers, nitriles, amides, a mixed solvent containing two or more of the foregoing, and the like may be used. Examples of the non-aqueous solvent include ethylene carbonate (EC), ethyl methyl carbonate (EMC), dimethyl carbonate (DMC), diethyl carbonate (DEC), and a mixed solvent containing the foregoing solvents. The non-aqueous solvent may contain a halogen-substituted product (such as fluoroethylene carbonate (FEC)) obtained by substituting at least a part of hydrogens in the above solvents with halogen atoms such as fluorine. When adding FEC, a suitable amount to be added is, for example, greater than or equal to 0.5 mass% and less than or equal to 5 mass% based on the mass of the non-aqueous solvent. As the electrolyte salt, for example, a lithium salt such as LiPF₆ is used. Furthermore, vinylene carbonate (VC) may be added in an amount of greater than or equal to 1 mass% and less than or equal to 5 mass% based on the mass of the non-aqueous electrolyte.

The positive electrode 11, the negative electrode 12, and the separator 13, which constitute the electrode assembly 14, are all long strip-shaped members, and are alternately laminated in the radial direction of the electrode assembly 14 by being wound in a spiral shape. The negative electrode 12 is formed to have a size slightly larger than that of the positive electrode 11 in order to prevent lithium deposition. That is, the negative electrode 12 is formed to be longer than the positive electrode 11 in the lengthwise direction and in the widthwise direction (i.e., the shorter direction). The separator 13 is formed to have a size slightly larger than at least the positive electrode 11, and, for example, two sheets of separators are arranged so as to sandwich the positive electrode 11. The electrode assembly 14 has a positive electrode lead 20 connected to the positive electrode 11 by welding or the like, and a negative electrode lead 21 connected to the negative electrode 12 by welding or the like.

The positive electrode 11 comprises a positive electrode core and a positive electrode mixture layer formed on the positive electrode core. As the positive electrode core, it is possible to use a foil of a metal such as aluminum or an aluminum alloy that is stable in the potential range of the positive electrode 11, a film having such a metal disposed on its surface layer, and the like. The positive electrode mixture layer contains a positive electrode active material, a conductive agent, and a binder, and is preferably formed on both sides of the positive electrode core in portions other than an exposed portion to which the positive electrode lead 20 is welded. The positive electrode 11 can be produced by applying a positive electrode mixture slurry containing the positive electrode active material, the conductive agent, the binder, and the like onto the positive electrode core, drying the applied coating, and then compressing the coating to thereby form positive electrode mixture layers on both sides of the positive electrode core.

The positive electrode mixture layer contains, as the positive electrode active material, a lithium metal composite oxide in particulate form. The lithium metal composite oxide is a composite oxide containing a metal element such as Co, Mn, Ni, or Al in addition to Li. The metal element constituting the lithium metal composite oxide is, for example, at least one selected from Mg, Al, Ca, Sc, Ti, V, Cr, Mn, Fe, Co, Ni, Cu, Zn, Ga, Ge, Y, Zr, Sn, Sb, W, Pb, and Bi. Among these, at least one selected from Co, Ni, and Mn is preferably contained. Examples of a suitable composite oxide include a lithium metal composite oxide containing Ni, Co, and Mn, and a lithium metal composite oxide containing Ni, Co, and Al.

Examples of the conductive agent contained in the positive electrode mixture layer include carbon materials, including carbon black such as acetylene black and Ketjenblack, graphite, carbon nanotubes (CNT), carbon nanofibers, and graphene. Examples of the binder contained in the positive electrode mixture layer include fluororesins such as polytetrafluoroethylene (PTFE) and polyvinylidene fluoride (PVDF), polyacrylonitrile (PAN), polyimides, acrylic resins, and polyolefins. These resins may be used in combination with carboxymethyl cellulose (CMC) or a salt thereof, polyethylene oxide (PEO), and the like.

The negative electrode 12 comprises a negative electrode core and a negative electrode mixture layer formed on the negative electrode core. As the negative electrode core, it is possible to use a foil of a metal such as copper or a copper alloy that is stable in the potential range of the negative electrode 12, a film having such a metal disposed on its surface layer, and the like. The negative electrode mixture layer contains a negative electrode active material, a binder, and, when necessary, a conductive agent, and is preferably formed on both sides of the negative electrode core in portions other than an exposed portion to which the negative electrode lead 21 is welded. The negative electrode 12 can be produced by applying a negative electrode mixture slurry containing the negative electrode active material, the binder, and the like onto the negative electrode core, drying the applied coating, and then compressing the coating to thereby form negative electrode mixture layers on both sides of the negative electrode core.

As the binder contained in the negative electrode mixture layer, fluorine-containing resins, PAN, polyimides, acrylic resins, polyolefins, and the like can be used as in the case of the positive electrode 11, but styrene-butadiene rubber (SBR) is preferably used. Further, the negative electrode mixture layer preferably contains CMC or a salt thereof, polyacrylic acid (PAA) or a salt thereof, polyvinyl alcohol (PVA), or the like. Among the foregoing, use of SBR in combination with CMC or a salt thereof or PAA or a salt thereof is preferred. The negative electrode mixture layer may contain a conductive agent such as CNT.

As the separator 13, a porous sheet having ion permeability and insulating property is used. Specific examples of the porous sheet include a microporous thin film, a woven fabric, and a non-woven fabric. As the material of the separator 13, polyolefins such as polyethylene and polypropylene, cellulose, and the like are suitable. The separator 13 may have either a single-layer structure or a multi-layer structure. Further, on the surface of the separator 13, there may be formed a highly heat-resistant resin layer made of aramid resin or the like. A filler layer containing an inorganic filler may be formed at an interface between the separator 13 and at least one of the positive electrode 11 and the negative electrode 12.

Above and below the electrode assembly 14, insulation plates 18, 19 are provided respectively. In the example shown in FIG. 1, the positive electrode lead 20 extends through a through hole in the insulation plate 18 and toward the sealing assembly 17, while the negative electrode lead 21 extends outside the insulation plate 19 and toward the bottom portion of the outer can 16. The positive electrode lead 20 is connected by welding or the like to the lower surface of an internal terminal plate 23 of the sealing assembly 17, and a cap 27, which is the top plate of the sealing assembly 17 electrically connected to the internal terminal plate 23, serves as the positive electrode terminal. The negative electrode lead 21 is connected by welding or the like to the inner surface of the bottom portion of the outer can 16, and the outer can 16 serves as the negative electrode terminal.

A gasket 28 is provided between the outer can 16 and the sealing assembly 17 to ensure airtightness inside the battery. The outer can 16 has a grooved portion 22 formed thereon, where a part of a side surface portion projects inward, and which supports the sealing assembly 17. The grooved portion 22 is preferably formed in an annular shape along the circumferential direction of the outer can 16, and supports the sealing assembly 17 on its upper surface. The sealing assembly 17 is fixed to an upper part of the outer can 16 by means of the grooved portion 22 and an opening end of the outer can 16 which is crimped to the sealing assembly 17.

The sealing assembly 17 has a structure obtained by laminating, in order from the electrode assembly 14 side, the internal terminal plate 23, a lower vent member 24, an insulation member 25, an upper vent member 26, and the cap 27. Each of the members constituting the sealing assembly 17 has, for example, a disk shape or a ring shape, and the respective members except the insulation member 25 are mutually electrically connected. The lower vent member 24 and the upper vent member 26 are connected to each other at their central portions, and the insulation member 25 is interposed between peripheral edge portions of these vent members. When the battery internal pressure increases due to abnormal heat generation, the lower vent member 24 deforms and ruptures in a manner pushing up the upper vent member 26 toward the cap 27, and the current path between the lower vent member 24 and the upper vent member 26 is thereby cut off. When the internal pressure increases further, the upper vent member 26 ruptures, and gas is discharged from an opening in the cap 27.

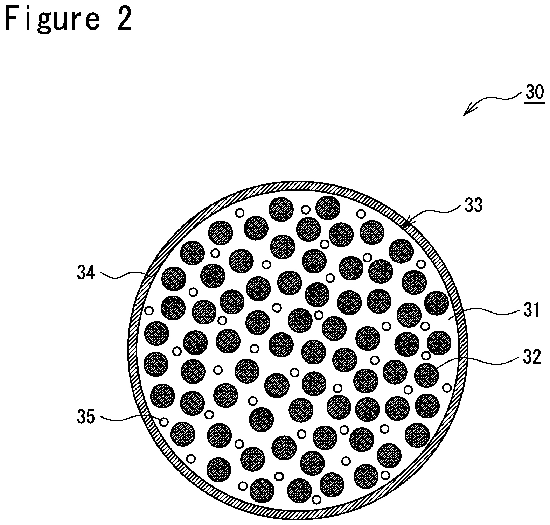

The negative electrode active material will now be described in detail by reference to FIG. 2.

FIG. 2 is a diagram schematically illustrating a cross section of a particle of a Si-containing composite material 30 according to an example embodiment. The negative electrode 12 contains at least the Si-containing composite material 30 as the negative electrode active material, and preferably contains the Si-containing composite material 30 and graphite. Combined use of the Si-containing composite material 30 and graphite as the negative electrode active material facilitates simultaneously achieving both high capacity and excellent cycle characteristic. The graphite content is, for example, greater than or equal to 70 mass% and less than or equal to 99 mass%, and preferably greater than or equal to 75 mass% and less than or equal to 97 mass%, based on the total mass of the negative electrode active material.

The graphite may be any of artificial graphite such as massive artificial graphite (MAG) and graphitized mesophase carbon microbeads (MCMB), and natural graphite such as flake graphite, massive graphite, and amorphous graphite. The volume-based median diameter (hereinafter referred to as "D50") of the graphite is not particularly limited, but is preferably greater than or equal to 10 µm and less than or equal to 30 µm, and more preferably greater than or equal to 15 µm and less than or equal to 25 µm. D50 means a particle size at which, in a volume-based particle size distribution, the cumulative frequency from the smaller particle size end reaches 50 %. The particle size distribution of the graphite can be measured with a laser diffraction particle size distribution measuring device (for example, SALD-2000A manufactured by Shimadzu Corporation) using water as the dispersion medium.

As shown in FIG. 2, the Si-containing composite material 30 contains a carbon phase 31, and also contains silicon 32 and a metal oxide 35 which are dispersed in the carbon phase 31. The Si-containing composite material 30 comprises a base particle 33 containing the carbon phase 31 and the silicon 32, and a conductive layer 34 is preferably formed on the surface of the base particle 33. The base particle 33 has a sea-island structure in which fine particles of silicon 32 and metal oxide 35 are dispersed in a matrix composed of the carbon phase 31. It is considered that by adding a predetermined amount of metal oxide 35 to the carbon phase 31, side reactions with the electrolyte are effectively suppressed while maintaining low reaction resistance, and the cycle characteristic of the battery is significantly improved. Although the Si-containing composite material 30 may be composed of only the base particles 33, from the perspective of preventing contact between the silicon 32 and the non-aqueous electrolyte, the Si-containing composite material 30 preferably has the conductive layer 34.

The D50 of the Si-containing composite material 30 is preferably smaller than the D50 of the graphite. By mixing the Si-containing composite material 30 having a small particle size with the graphite having a large particle size, the packing density of the negative electrode active material in the negative electrode mixture layer is increased, which contributes to increasing the capacity of the battery. The D50 of the Si-containing composite material 30 can be measured in the same manner as the D50 of the graphite, and is preferably greater than or equal to 2 µm and less than or equal to 20 µm, and more preferably greater than or equal to 3 µm and less than or equal to 15 µm. When the D50 is within this range, the size of the surface area of the Si-containing composite material 30 is appropriate, which makes it easy to suppress side reactions with the non-aqueous electrolyte.

The silicon 32 in the form of fine particles, which will be described later, is dispersed in the amorphous carbon phase 31 having ion conductivity, and serves to repeatedly occlude and release Li ions as the battery is charged and discharged. In the Si-containing composite material 30, capacitance is generated by a Faradaic reaction in which the silicon 32 is involved. The silicon 32 is a negative electrode active material having a higher capacity than the graphite, and undergoes a great degree of expansion and contraction during charging and discharging. However, since the silicon 32 is dispersed in the carbon phase 31, stress caused by such volume changes of the silicon 32 are mitigated by the carbon phase 31. In addition, the carbon phase 31 prevents contact between the silicon 32 and the non-aqueous electrolyte, and thereby suppresses side reactions.

The content of the silicon 32 is limited to less than or equal to 60 mass% based on the mass of the Si-containing composite material 30. If the silicon 32 content exceeds 60 mass%, for example, volume changes of the particles during charging and discharging would be larger, and particle cracking would easily occur. It is considered that, as a result, side reactions between the non-aqueous electrolyte and the silicon 32 would be likely to occur, and the cycle characteristic of the battery would be significantly deteriorated.

On the other hand, if the silicon 32 content is too small, the capacity of the Si-containing composite material 30 becomes decreased. Accordingly, the silicon 32 content based on the mass of the Si-containing composite material 30 is preferably greater than or equal to 20 mass%, more preferably greater than or equal to 30 mass%, and particularly preferably greater than or equal to 40 mass%. A suitable content of the silicon 32 is greater than or equal to 30 mass% and less than or equal to 60 mass%, and more preferably greater than or equal to 40 mass% and less than or equal to 55 mass%.

The silicon 32 is composed of, for example, a plurality of crystallites. The crystallite size of the silicon 32 is preferably less than or equal to 30 nm, more preferably less than or equal to 20 nm, and particularly preferably less than or equal to 15 nm. With this feature, volume changes of the Si-containing composite material 30 caused by the expansion and contraction of the silicon 32 during charging and discharging can be reduced, and improvement in the cycle characteristic becomes more notable. The crystallite size of the silicon 32 is calculated by the Scherrer equation from the half-width of the diffraction peak of the Si(111) plane obtained by performing X-ray diffraction (XRD) measurement of the Si-containing composite material 30.

The average particle size of the silicon 32 is, at least before initial charging and discharging, preferably less than or equal to 500 nm, more preferably less than or equal to 200 nm, and particularly preferably less than or equal to 50 nm. By micronizing and dispersing the silicon 32, volume changes of the Si-containing composite material 30 during charging and discharging are reduced, and stability of the particle structure is further improved. The average particle size of the silicon 32 is determined based on observation of a particle cross section of the Si-containing composite material 30 using a scanning electron microscope (SEM). Specifically, the average particle size is determined by arbitrarily selecting 100 particles of the silicon 32 from a SEM image of a cross section of the Si-containing composite material 30, measuring the diameters of circles circumscribing the respective particles, and averaging the measured values.

The carbon phase 31 is a continuous phase of amorphous carbon. The carbon phase 31 has good ion conductivity, and Li ions are supplied to the silicon 32 through the carbon phase 31. The amorphous carbon constituting the carbon phase 31 is, for example, a carbon material having an average interplanar spacing between (002) planes of greater than 0.34 nm as determined by XRD measurement, and is obtained by heat-treating a pitch having a softening point of higher than or equal to 200 °C at a temperature of higher than or equal to 700 °C and lower than or equal to 900 °C. While the conductive layer 34 is similarly formed by heat-treating a pitch, the carbon phase 31 is preferably formed using a pitch having a higher softening point than that used for the conductive layer 34.

In addition to the silicon 32, the carbon phase 31 contains a metal oxide 35. The metal oxide 35 is preferably dispersed approximately uniformly throughout the carbon phase 31 without being unevenly densely distributed around the silicon 32. The content of the metal oxide 35 is greater than or equal to 0.001 mass% and less than or equal to 2 mass% based on the mass of the Si-containing composite material 30. If the metal oxide 35 content exceeds 2 mass%, it is considered that reaction resistance would increase sharply, and no improvement in the cycle characteristic can be obtained. Further, if the content is less than 0.001 mass%, the effect of adding the metal oxide 35 would not be exhibited, and no improvement in the cycle characteristic can be obtained.

The metal oxide 35 content is preferably greater than or equal to 0.1 mass% and less than or equal to 2 mass%, more preferably greater than or equal to 0.5 mass% and less than or equal to 2 mass%, and particularly preferably greater than or equal to 1 mass% and less than or equal to 2 mass%, based on the mass of the Si-containing composite material 30. When the metal oxide 35 content is within this range, it is considered that side reactions between the Si-containing composite material 30 and the electrolyte can be suppressed more efficiently compared to when the content is beyond this range, and improvement in the cycle characteristic becomes more notable.

The metal oxide 35 is, for example, dispersed in the carbon phase 31 in the form of particles having a size equivalent to or smaller than that of the silicon 32. It can be said that the metal oxide 35 is dispersed in the carbon phase 31 in the form of fine particles as with the silicon 32. If the average particle size of the metal oxide 35 is larger than the average particle size of the silicon 32, dispersibility of the silicon 32 would be decreased, and the silicon 32 would tend to be unevenly densely distributed in parts of the carbon phase 31. The average particle size of the metal oxide 35 is preferably less than or equal to 500 nm, more preferably less than or equal to 200 nm, and particularly preferably less than or equal to 50 nm.

The metal oxide 35 is a metal oxide that does not react with Li, and specific examples thereof include zirconium oxide, aluminum oxide, titanium oxide, nickel oxide, and yttrium oxide. Among these, at least one selected from the group consisting of zirconium oxide (ZrO₂), aluminum oxide (Al₂O₃), and titanium oxide (TiO₂) is preferable. By using ZrO₂, Al₂O₃, or TiO₂ as the metal oxide 35, improvement in the cycle characteristic becomes more notable. A particularly suitable metal oxide 35 is ZrO₂ or TiO₂.

The contents of elements in the carbon phase 31 can be measured by inductively coupled plasma emission spectrometry (ICP). Specifically, the Si-containing composite material 30 is dissolved in a heated acid solution (mixed acid of hydrofluoric acid, nitric acid, and sulfuric acid), and carbon remaining in the solution is removed by filtration. The filtrate thus obtained is then analyzed by ICP to determine the contents of elements in the carbon phase 31. The carbon content in the Si-containing composite material 30 can be measured using a carbon/sulfur analyzer (for example, model EMIA-520 manufactured by Horiba, Ltd.).

As described above, the Si-containing composite material 30 has the conductive layer 34 formed on the surface of the base particles 33. The conductive layer 34 covers at least part of the surface of the base particles 33, and preferably covers substantially the entire surface of the base particles 33. The conductive layer 34 is a thin film layer including a conductive material, and serves to enhance electrical conductivity of the Si-containing composite material 30. The thickness of the conductive layer 34 is preferably thin enough to not affect the particle size of the Si-containing composite material 30. In consideration of ensuring electrical conductivity and Li-ion diffusivity, the thickness of the conductive layer 34 is preferably greater than or equal to 1 nm and less than or equal to 200 nm, and more preferably greater than or equal to 5 nm and less than or equal to 100 nm. The thickness of the conductive layer 34 can be measured based on observation of a particle cross section using an SEM. Although the Si-containing composite material 30 may be composed of only the base particles 33, presence of the conductive layer 34 more reliably prevents contact between the silicon 32 and the non-aqueous electrolyte.

The conductive material constituting the conductive layer 34 is preferably a conductive carbon material. As the carbon material, it is possible to use amorphous carbon, graphite (natural graphite, artificial graphite, graphitized mesophase carbon, etc.), soft carbon (graphitizable carbon), hard carbon, and the like. Among these, amorphous carbon is preferred for its easiness to form the thin conductive layer 34 that covers the surface of the base particles 33. Examples of the amorphous carbon include carbon black, baked pitch, coke, and activated carbon. Among these, baked pitch is preferable.

The Si-containing composite material 30 can be produced, for example, by mixing silicon powder, metal oxide powder, and amorphous carbon such as pitch, and then heat-treating and pulverizing the mixture. By heat-treating the mixture, there can be obtained base particles 33 in which silicon 32 and metal oxide 35 are dispersed in a carbon phase 31. The mixing of the raw materials and the heat treatment are preferably carried out in an inert atmosphere (for example, in an atmosphere of argon, nitrogen, or the like). For example, a ball mill is used for the mixing of the raw materials. As the silicon and metal oxide powders, it is preferable to use materials with an average particle size of less than or equal to 1 µm.

The above-noted heat treatment is carried out in an inert atmosphere at a temperature of, for example, higher than or equal to 450 °C and lower than or equal to 1000 °C. When the heat treatment temperature is within this range, it is easy to form a sea-island structure in which fine particles of silicon 32 and metal oxide 35 are dispersed in a carbon phase 31 having low crystallinity. The heat treatment temperature is preferably higher than or equal to 600 °C and lower than or equal to 950 °C, and more preferably higher than or equal to 700 °C and lower than or equal to 900 °C. The heat treatment time is, for example, more than or equal to 1 hour and less than or equal to 10 hours. Heat treatment conditions also affect the crystallites of the silicon 32, and in general, with a higher temperature, the crystallite size becomes larger.

The process for producing the Si-containing composite material 30 further includes a step of forming a conductive layer 34 on the surface of the base particles 33. Examples of a method for forming a carbon coating as the conductive layer 34 include a CVD method using a hydrocarbon gas such as acetylene or methane as a raw material, and a method in which coal pitch, petroleum pitch, phenolic resin, or the like is mixed with the base particles 33 and heat-treated. For example, by heat-treating a mixture of the base particles 33 and pitch in an inert atmosphere at higher than or equal to 700 °C and lower than or equal to 900 °C, there can be obtained a Si-containing composite material 30 in which a conductive layer 34 of amorphous carbon is formed on the surface of the base particles 33.

### EXAMPLES

While the present disclosure will be further described below using Experimental Examples, the present disclosure is not limited to these Experimental Examples.

### <Experimental Example 1>

### [Production of Positive Electrode]

A composite oxide represented by LiCo_{0.979} Zr_{0.001}Mg_{0.01}Al_{0.01}O₂ was used as the positive electrode active material. A positive electrode mixture slurry was prepared by mixing the positive electrode active material, acetylene black, and PVDF in a solids mass ratio of 95:2.5:2.5, and using N-methyl-2-pyrrolidone (NMP) as the dispersion medium. Next, the positive electrode mixture slurry was applied by a doctor blade method to the surface of a positive electrode core made of aluminum foil, and the applied coating was dried and rolled. The product was then cut into a predetermined electrode size, and a positive electrode having positive electrode mixture layers formed on both sides of the positive electrode core was obtained.

### [Preparation of Negative Electrode Active Material (or Composite Material)]

In an inert atmosphere, silicon powder (having a purity of ≥ 99.9 % and an average particle size of 100 nm), zirconium oxide powder (having an average particle size of 5 nm), and pitch (having a softening point of higher than or equal to 225 °C and lower than or equal to 275 °C, and a solid carbon content of ≥ 70 mass%) were mixed and subjected to a blend processing for 1 hour using a ball mill. This mixture was heat-treated in an inert atmosphere at 800 °C for 5 hours, then pulverized using a roll crusher, and further pulverized using a jet mill, and a pulverized product having a D50 of 10 µm was thereby obtained. This pulverized product served as the base particles of the composite material.

Subsequently, the base particles and pitch (having a softening point of ≤ 100 °C and a solid carbon content of ≥ 55 mass%) were mixed, heat-treated in an inert atmosphere at 800 °C for 5 hours, and then pulverized using a roll crusher and a jet mill until the D50 reached 6 µm. As a result, there was obtained a Si-containing composite material (having a D50 of approximately 6 µm) in which a carbon coating was formed on the surface of the base particles, and in which fine particles of zirconium oxide were dispersed in a carbon phase. The composition (or element concentrations) of the composite material was confirmed by ICP. Based on the mass of the Si-containing composite material, the silicon content was 50 mass%, and the zirconium oxide content was 1 mass%. The D50 of the composite material was measured with a laser diffraction particle size distribution measuring device (SALD-2000A manufactured by Shimadzu Corporation) using water as the dispersion medium.

### [Production of Negative Electrode]

A mixture obtained by mixing the above composite material with graphite having a D50 of approximately 22 µm in a mass ratio of 5:95 was used as the negative electrode active material. A negative electrode mixture slurry was prepared by mixing the negative electrode active material, a Na salt of CMC, and a SBR dispersion in a solids mass ratio of 97.5:1.5:1.0, and using water as the dispersion medium. Next, the negative electrode mixture slurry was applied by a doctor blade method to the surface of a negative electrode core made of copper foil, and the applied coating was dried and rolled. The product was then cut into a predetermined electrode size, and a negative electrode having negative electrode mixture layers formed on both sides of the negative electrode core was obtained.

### [Preparation of Non-Aqueous Electrolyte Solution]

A non-aqueous electrolyte solution was prepared by dissolving lithium hexafluorophosphate (LiPF₆) at a concentration of 1 mol/L in a solvent obtained by mixing ethylene carbonate (EC) and methyl ethyl carbonate (MEC) in a volume ratio of 3:7 (at 25 °C), and adding vinylene carbonate (VC) thereto at a concentration of 2 mass%.

### [Production of Non-Aqueous Electrolyte Secondary Battery]

The above positive electrode and the above negative electrode were wound in a spiral shape with an interposed polyethylene separator, and then a winding fixation tape made of polypropylene was attached to the outermost peripheral surface. The wound product was pressed into a flat shape, and an electrode assembly was thereby obtained. An outer casing was formed by processing a laminate sheet having a five-layer structure composed of a resin layer (polypropylene), an adhesive layer, an aluminum alloy layer, an adhesive layer, and a resin layer (polypropylene). In an inert atmosphere, the electrode assembly and the non-aqueous electrolyte solution were placed in the outer casing. After that, pressure inside the outer casing was reduced to impregnate the separator with the electrolyte solution, and the opening of the outer casing was sealed. A pouch-type non-aqueous electrolyte secondary battery having a length of 62 mm, a width of 35 mm and a thickness of 3.6 mm was thereby produced.

### <Experimental Example 2>

A non-aqueous electrolyte secondary battery was produced in the same manner as in Experimental Example 1 except that the zirconium oxide content was changed to 0.001 mass% based on the mass of the Si-containing composite material.

### <Experimental Example 3>

A non-aqueous electrolyte secondary battery was produced in the same manner as in Experimental Example 1 except that the zirconium oxide content was changed to 2 mass% based on the mass of the Si-containing composite material.

### <Experimental Example 4>

A non-aqueous electrolyte secondary battery was produced in the same manner as in Experimental Example 1 except that zirconium oxide was replaced with aluminum oxide (having an average particle size of 50 nm).

### <Experimental Example 5>

A non-aqueous electrolyte secondary battery was produced in the same manner as in Experimental Example 1 except that zirconium oxide was replaced with titanium oxide (having an average particle size of 25 nm).

### <Experimental Example 6>

A non-aqueous electrolyte secondary battery was produced in the same manner as in Experimental Example 1 except that the silicon content was changed to 60 mass% based on the mass of the Si-containing composite material.

### <Experimental Example 7>

A non-aqueous electrolyte secondary battery was produced in the same manner as in Experimental Example 1 except that zirconium oxide was not added.

### <Experimental Example 8>

A non-aqueous electrolyte secondary battery was produced in the same manner as in Experimental Example 1 except that the zirconium oxide content was changed to 5 mass% based on the mass of the Si-containing composite material.

### <Experimental Example 9>

A non-aqueous electrolyte secondary battery was produced in the same manner as in Experimental Example 1 except that the silicon content was changed to 70 mass% based on the mass of the Si-containing composite material.

Regarding each of the batteries of the Experimental Examples, the capacity retention rate was evaluated by the following method. The evaluation results are shown in Table 1 together with the compositions of the composite materials.

### [Evaluation of Cycle Characteristic]

At 25 °C, the battery to be evaluated was charged with a constant current of 1 It (800 mA) until the voltage reached 4.2 V, and then charged with a constant voltage of 4.2 V until the current reached 1/20 It (40 mA). After that, at 25 °C, discharging was performed with a constant current of 1 It (800 mA) until the voltage reached 2.75 V. This charging and discharging process was repeated for 300 cycles, and the ratio of the discharge capacity in the 300th cycle to the discharge capacity in the 1st cycle was calculated as the capacity retention rate.

**[Table 1]**

| | Si content (mass%) | Metal oxide | | Capacity retention rate (%) |
|---|---|---|---|---|
| | | Type | Content (mass%) | |
| Experimental Example 1 | 50 | ZrO₂ | 1 | 76.7 |
| Experimental Example 2 | 50 | ZrO₂ | 0.001 | 75.0 |
| Experimental Example 3 | 50 | ZrO₂ | 2 | 76.6 |
| Experimental Example 4 | 50 | Al₂O₃ | 1 | 75.8 |
| Experimental Example 5 | 50 | TiO₂ | 1 | 76.5 |
| Experimental Example 6 | 60 | ZrO₂ | 1 | 75.2 |
| Experimental Example 7 | 50 | - | - | 72.4 |
| Experimental Example 8 | 50 | ZrO₂ | 5 | 72.8 |
| Experimental Example 9 | 70 | ZrO₂ | 1 | 71.2 |

From the results shown in Table 1, it can be seen that, as compared to a conventional battery (Experimental Example 7) using a Si-containing composite material that does not contain a metal oxide such as ZrO₂ in the carbon phase, all of the batteries of Experimental Examples 1 to 6 had a higher capacity retention rate in the cycle test and thus a better cycle characteristic. Furthermore, even when ZrO₂ was contained, if the content exceeded 2 mass% or if the silicon content exceeded 60 mass%, no improvement in the cycle characteristic was obtained.

Although a good cycle characteristic was obtained also when Al₂O₃ and TiO₂ were added instead of ZrO₂ (see Experimental Examples 1, 4, and 5), improvement in the cycle characteristic was more notable when a Si-containing composite material to which ZrO₂ or TiO₂ was added as the metal oxide was used.

### REFERENCE SIGNS LIST

10 non-aqueous electrolyte secondary battery; 11 positive electrode; 12 negative electrode; 13 separator; 14 electrode assembly; 16 outer can; 17 sealing assembly; 18, 19 insulation plate; 20 positive electrode lead; 21 negative electrode lead; 22 grooved portion; 23 internal terminal plate; 24 lower vent member; 25 insulation member; 26 upper vent member; 27 cap; 28 gasket; 30 Si-containing composite material; 31 carbon phase; 32 silicon; 33 base particle; 34 conductive layer; 35 metal oxide.

## Claims

1. A negative electrode active material for non-aqueous electrolyte secondary battery, comprising
a Si-containing composite material which contains an amorphous carbon phase, and which also contains silicon and a metal oxide that are dispersed in the carbon phase,
wherein
a content of the metal oxide is greater than or equal to 0.001 mass% and less than or equal to 2 mass% based on a mass of the Si-containing composite material, and
a content of the silicon is less than or equal to 60 mass% based on the mass of the Si-containing composite material.

2. The negative electrode active material according to claim 1, wherein
the metal oxide is at least one selected from the group consisting of zirconium oxide, aluminum oxide, and titanium oxide.

3. A non-aqueous electrolyte secondary battery, comprising
a positive electrode, a negative electrode, and a non-aqueous electrolyte, wherein
the negative electrode contains the negative electrode active material according to claim 1 or 2.
